# EUROPEAN PATENT SPECIFICATION

(11) **EP 2 477 716 B1**
(45) Date of publication and mention of the grant of the patent: **28.05.2014**
(21) Application number: 09782966.7
(22) Date of filing: 14.09.2009
(51) Int. Cl.: C04B 35/563, C04B 35/573, C04B 35/80, C04B 35/565, C04B 35/584, C04B 35/622, C04B 35/626, C04B 111/00, C04B 37/00, C04B 38/00

(54) **A CERAMIC ELEMENT AND A METHOD OF MANUFACTURING THE CERAMIC ELEMENT**
KERAMIKELEMENT UND VERFAHREN ZUR HERSTELLUNG DES KERAMIKELEMENTS
ÉLÉMENT CÉRAMIQUE ET PROCÉDÉ DE FABRICATION DE CELUI-CI

(43) Date of publication of application: 25.07.2012
(73) Proprietor: Stiholt, Leif, 9352 Dybvad (DK)
(72) Inventor: WOLFF, Thomas, 95213 Münchberg (DE); FRIEDRICH, Holger, 95482 Gefrees (DE)
(74) Representative: Inspicos A/S
(86) International application number: PCT/EP2009/061866
(87) International publication number: WO 2011/029481

(56) References cited:
- EP-A1- 0 816 065
- EP-A1- 1 495 791
- WO-A1-95/06510
- US-A1- 2006 021 310

## Description

The present invention relates to a ceramic element and in particular to a segmented element comprising a plurality of porous segments for use as e.g. a filter, and which are assembled or attached to each other by a ceramic layer and which can comprise an additional sealing layer on the outer surface. A particularly interesting type of ceramic element is for use in flue gas from e.g. diesel engines. This flue gas comprises both toxic gasses which should be converted using a catalyst, and particles which should be filtered. This gas, however, is both very hot and chemically aggressive.

Within the materials currently used as ceramic substrates, the material with the best chemical and thermal resistance is SiC (silicon carbide). This material is used in many hot gas filtration applications. A disadvantage is the high coefficient of thermal expansion in comparison to Cordierite, which is also used in hot gas filtration, but it has the huge disadvantage that the heat conductivity is very poor and that the chemical resistance is not very good. Stored ash which is a by-product from diesel additives and engine oil and which accumulates in the filter during operation acts as a flux material for Cordierite and this effect reduces the thermal resistance over the service life of a Cordierite filter.

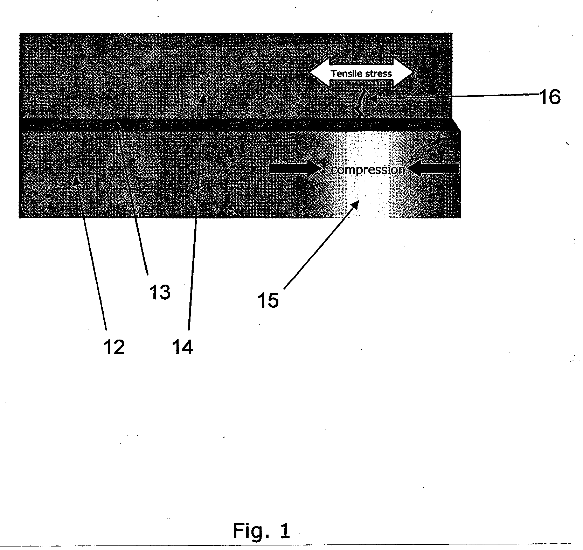

The DPF (Diesel Particulate Filter) systems today made of SiC are usually made of single SiC honeycomb elements which are bonded together after the final sintering process with a special ceramic cement. This cement usually contains ceramic fibres with a high Youngs modulus which makes the cement able to withstand high mechanical stress. Figure 1 indicates thermal shock conditions and the consecutive stress development and distribution in a filter which build up when a hot zone is generated during a regeneration of a filter when collected soot is burned off. The assembling/bonding material in the form of the classic fibre cement should prevent the build up of cracks in the outer elements due to thermal expansion of the inner hot elements. The realization of this kind of solution may be seen in EP0816065, US666975B1 EP1479881, EP1479882, and EP1724448 all describing assemblies of porous ceramic honeycomb elements by a cement containing inorganic fibres. The disadvantage of these solutions is the fact, that this kind of assembling/bonding material of has a lower coefficient of thermal conductivity than the filter material. For example the US666975B1 describes porous sintered SiC honey combs which are assembled by sealing layers with thermal conductivities in the range of 0,1 - 10 W/mK. The sintered honey combs in that application are made by a recrystallization process at 2200°C and such type of porous elements have a thermal conductivity of 11 - 40 W/mK. This means that the sealing layer acts as a thermal barrier when heat has to be transported from the inner segments filter to the segments on the outside thus keeping the temperature of the inner segments at a higher level and consequently increasing the inter segment stresses. To reduce this effect, the classic fibre cement materials are prepared as dense systems with a low porosity. This leads to the effect, that the sealing members have a huge contribution to the whole weight of the filter. However, future DPF applications need low specific filter weights to enable a fast heat up of the whole filter and to reach the light-off of the catalyst at low exhaust gas temperatures. Therefore, it would be a great advantage if a material could be found which has the same or even a higher thermal conductivity than the filter material and a similar or lower thermal weight.

Therefore it is desired to provide a filter which has a high thermal shock resistance and a high thermal and chemical resistance. The presently preferred filtering elements according to the invention are made of reaction formed SiC, which is described in EP1741685, US2007032370, and WO2007003428.

In a first aspect, the invention relates to ceramic element comprising:
- a plurality of porous elements comprising a plurality of parallel through channels divided by porous walls made of a first predetermined ceramic material and
- a porous, fibrous material interconnecting the plurality of porous elements into a single element, the porous, fibrous material being made of a second predetermined ceramic material,
wherein the fibrous material has a minimum porosity of 30% and contains a minimum of 40wt% of fibres.

In this respect, a ceramic element is an element at least predominantly made of a ceramic. This ceramic may be mixture of ceramics if desired.

Any number of porous elements may be used, as may any shape thereof. A preferred overall shape of the assembly is one with a circular or oval cross section, and this shape, as any other shape, may be obtained by e.g. moulding the elements with particular shapes which, when assembled, provides the desired shape, or the elements may when assembled be machined to obtain the desired shape.

The microstructure of the porous elements may be used for e.g. filtering a gas, if the gas is forced through the walls of the elements, which would take place, if the through channels were closed in a checker-board pattern. The porosity of the channel walls may be as low as 40% and may in principle be as high as possible, taking into account that the higher the porosity, the lower the strength of the wall.

Another interesting parameter of the microstructure is the pore size which, together with the wall thickness, takes part in defining the filtering efficiency of the wall and the pressure drop caused by the wall.

The plurality of parallel through channels increase the overall surface of the element, which surface may be used for filtering flue gas or for exposing the flue gas to a catalyst provided on the walls.

The porous structure of the cell wall, especially at the surface thereof, may be used for increasing the surface which can be coated by a functional material e.g. a catalyst.

The porosity of a porous ceramic material may be generated in a number of manners, and different manners may result in different types of porosities. In one situation, the porosity is generated by a pore former which usually is given by particles of a volatile element provided in the ceramic before heating. This element will evaporate during heating and leave pores in the heated material.

In another situation, particles of the shaped/moulded material may by their positions in the moulded not yet heated/sintered material define the porosity, when material between such particles is removed by the heating/sintering. In one situation, these particles are ceramic materials, and the other material may be green binders, lubricants or the like. In another situation, the ceramic itself is formed during heating/sintering from ceramic forming materials, one being in the form of the particles and the other being part of the material provided between the particles.

As mentioned above, the porous elements may be provided in any desired manner, such as by providing a starting compound or paste which is shaped and subsequently heated/sintered, where particles in and/or parts of the paste then define the porosity and inner structure of the porous element after heating/sintering.

Thus, in a preferred embodiment, the plurality of porous elements have walls comprising a plurality of interconnected grains or particles of the first predetermined ceramic material.

Materials of this type may, depending on the porosity, particle size, wall thickness, pore size and the like, be more or less fragile. Then, in this situation, the walls preferably comprise a number of reinforcing fibres, typically of the same, first ceramic material. These fibres usually are provided in the starting paste so as to be moulded/extruded together with the particles. Fibres for this use may have a length of 50 - 100µm or a length of 2 - 10mm or mixtures thereof.

In the present context, the porous, fibrous material preferably has a minimum of 40wt% of fibres. Fibres in this respect being characterized by a length to width/diameter ratio of 2 or more, such as 4 or more, preferably 10 or more, and usually with a length smaller than 20 mm.

The interconnecting of the porous elements preferably achieved by the ceramic material of the fibrous material being in contact with that of the porous elements. Preferably, the ceramic material of the fibrous material has melted/fused together with the material of the porous element, so that other types of glues, cements or the like may be avoided. Preferably, the fibrous material is provided on all of the sides of the porous elements facing each other, but also a lower "coverage" may be used. Naturally, holes or imperfections may occur, but it may also be desired or accepted that only a part of the surfaces are covered, as long as the desired strength is obtained. If the ceramic element is intended for use as a filter, it preferably is ensured that gas cannot travel from one end of the porous elements to the other without being exposed either to a wall of a porous element or the fibrous material.

When interconnecting all porous elements, a single monolithic element where all porous elements are fixed to each other may be obtained. This element has several advantages. It is e.g. much easier to handle during canning etc. than a number of individual elements. And for example, it is ensured that the individual porous elements are not displaced during e.g. use, which displacement may give problems both as to the filtering efficiency, if a filter is desired, or from a stress point of view.

It is noted that if the element is used for filtering flue gas, for example, the porosity of the fibrous material is not a problem in that gas filtered by this material may be exposed to this material at least a major part of a length of the filter, whereas gas forced trough a porous element experiences the porosity thereof only across the thickness of the wall.

As to the fibrous material, a number of advantages are seen, when this comprises a large percentage of fibres. Fibres have the advantage of being more flexible than particles, whereby an interconnection which may also provide a cushioning may be-provided. The effect of the fibres will depend on the overall thickness of the fibrous material between the porous elements and the fibre length. Usually, this layer is desired as thin as possible, but for practical purposes, it is difficult to make it thinner than 0.5 - 1 millimetres.

In one embodiment, the porous, fibrous material comprises at least 40 wt% fibres with a length of 10% or less of a mean distance between the porous elements. Fibres for this purpose may e.g. be based on milled carbon fibres which may be used as the carbon source if e.g. SiC is made by reaction forming of Silicon and Carbon. Alternatively, fibres of the ceramic material or a similar ceramic material may be used.

The distance between two neighbouring porous elements may vary due to imperfections in the shaping step thereof and also a subsequent heating/calcination/sintering. The mean distance, however, is easily determined.

When fibres are used which have a length comparable to the distance between the porous elements, the fibres may both contact both porous elements and extend non-parallel to the surfaces thereof, so that an especially effective cushioning is provided between the porous elements. This effect will be effective in all directions, due to the fibres being adapted to be directed rather freely between the porous elements.

Therefore in another embodiment, the porous, fibrous material comprises at least 2 wt% fibres with a length of 100-1000%, or even more, of a mean distance between the porous elements.

Fibres much longer than the mean distance between the neighbouring porous elements naturally will tend to be directed along this interface or at least not perpendicular thereto. Thus, an enforcement of the fibrous material in that direction is seen. The thermal stress seen in a ceramic element of this type, when heated locally, is primarily in a length direction of the porous elements, whereby it may be desirable to direct at least a majority of these long fibres at least substantially in the longitudinal direction of the porous elements. This directionality of the fibres may be obtained by extruding the layer along the desired direction of the fibres.

The above two effects may be combined where the porous, fibrous material comprises at least 38 wt% fibres with a length of 10% or less of a mean distance between the porous elements and at least 2 wt% fibres with a length of 100-1000% or more of the mean distance. In this manner, a bimodal length distribution is used, whereby a combination of the cushioning effect and the fibre reinforcement is seen.

The first and second ceramic materials may be the same, may be different or may be of different types. Overall types of ceramics are e.g. carbon based ceramics and oxide based ceramics. A general behaviour is that oxide based ceramics tend to be better thermal insulators than carbon based ceramics. Thus, presently, it is preferred that the first and second ceramics are carbon based ceramics.

Presently, the predetermined ceramic material is SiC, no matter how this ceramic material is formed. Thus, both R-SiC, SiSiC, reaction formed SiC, α-SiC, β-SiC, and other types of SiC may be used. In general material which is mainly covalently bonded can be used, i.e. also Si₃N₄

An additional effect is seen especially when first and second ceramic materials are the same. In this situation, the fibres of the fibrous layer and the material of the porous elements may engage or be fused on a molecular level, so that part of the fibres actually form a homogeneous structure with material of the porous elements. In this manner, optimal heat conductance between the porous elements and the fibres is obtained, and optimal fixing of the fibrous material is seen.

A particularly interesting manner of obtaining this is described further below.

It is noted that even though it is preferred that the fibrous material is essentially of the same ceramic material as the porous elements, it is acceptable for both the porous elements and the fibrous material to contain also other elements. Usually, it is not possible to provide a ceramic material which is totally free from contaminations, and especially if made from different materials in the first place.

A second aspect of the invention relates to a method of manufacturing a porous, ceramic element, the method comprising
- shaping into a plurality of shaped elements one or more pastes comprising a first predetermined ceramic material or ceramic forming materials for forming the first predetermined ceramic, each element comprising a plurality of through holes divided by walls,
- assembling the shaped elements into one assembly by providing, between the shaped elements, a layer comprising fibres of a second ceramic material or one or more ceramic forming materials for forming the second ceramic material,
- heating the assembly so as to obtain, between the shaped elements, a layer of a porous, fibrous material having a minimum porosity of 30% and a minimum wt% of fibres of 40%.

Most of the thoughts relating to the second aspect also are valid for the third aspect.

The advantages of the fibrous layer of the third aspect have been described in relation to the first aspect.

As mentioned above, the shaping step preferably comprises shaping one or more pastes comprising a plurality of grains or particles of the first predetermined ceramic material or one or more ceramic forming materials for forming the first ceramic material. In this situation, the shaping step may comprise shaping one or more pastes comprising a number of reinforcing fibres of the ceramic material.

In that or another embodiment, the assembling step comprises providing a layer comprising at least 40 wt% fibres with a length of 10% or less of a layer thickness. Thus, the above cushioning effect may be obtained. In this respect, the layer thickness may be that of the assembled ceramic element or of the layer when provided on one shaped element and before contacting the layer with a neighbouring shaped element.

In another embodiment, the assembling step comprises providing a layer comprising at least 2 wt% fibres with a length of 100-1000% or more of a layer thickness, in order to obtain the above-mentioned reinforcement.

Alternatively, the assembling step comprises providing a layer comprising at least 38 wt% fibres with a length of 10% or less of a layer thickness and at least 2 wt% fibres with a length of 100-1000% or more of the layer thickness.

Preferably, the heating step comprises heating the assembly to a temperature at which at least one of the following takes place:
- a pore forming material of the paste(s) and/or layer evaporates/melts,
- the ceramic forming materials of the paste(s) and/or layer react to form the ceramic(s),
- ceramic particles of the paste(s) are interconnected by a permanent binder, which preferably is the same ceramic and/or
- any fibres of the layer are interconnected with any particles of the shaped elements.

As mentioned above, a number of considerations exist as to the first and second ceramic materials. In one respect, the thermal conductivity is of relevance and in another the manner in which the fibres and the material of the shaped elements are fixed to each other in the final product.

A third aspect of the invention relates to a ceramic element comprising:
- a porous element comprising a plurality of parallel through channels divided by porous walls made of a first predetermined ceramic material, the porous element having an outer surface, and
- a porous, fibrous material provided on at least part of the outer surface, wherein the fibrous material is made of a second predetermined ceramic material and has a minimum porosity of 30% and has at least 40 wt% of fibres.

In this respect, the porous element may be formed by a number of interconnected elements as described in relation to e.g. the first aspect. Naturally, also a monolithically, extruded element or an element made by any other method may be used.

The above-mentioned fibrous material is now used for providing an outer layer. Typically, this outer layer is provided not at end portions at which the through channels have openings but at a circumference thereof.

As mentioned above, advantages as to the fixing of the fibrous material to the porous element are seen when the first and second ceramic materials are at least of the same type.

When a high heat conductance is desired, the first and second ceramic materials are preferably carbon or nitrogen based or in general mainly covalently bonded ceramics and most preferably SiC or Si₃N₄.

If, on the other hand, a low thermal conductivity is desired, at least the second ceramic material but also the first ceramic materials may be oxide based ceramics.

Normally, a particulate filter is provided inside a can. In order to not loose heat to the can and the surroundings, an insulating layer, such as a fibre mat of e.g. Interam^{®}, may be used between the filter and the can. If the present fibrous material has a high heat conductance, this insulating layer may still be preferred. Then, the fibrous layer may, depending on the fibre length etc., provide additional cushioning of the filter and a better adhesion/attachment between the insulating layer and the filter.

However, the outer, fibrous material may also be provided with a low thermal conductance (even if the filter itself is of a material with a high heat conductance), whereby the insulating layer may be dispensed with. In this respect, it may be desired to provide the fibrous layer with a layer thickness of 5 mm or more, such as 10 mm or more, preferably 15 mm or more.

A fourth aspect relates to a method of manufacturing a porous, ceramic element, the method comprising
- shaping one or more pastes into a shaped element comprising a first predetermined ceramic material or ceramic forming materials for forming the first predetermined ceramic, the element comprising a plurality of through holes divided by walls and an outer surface,
- providing, on at least a part of the outer surface of the shaped element, a layer comprising a second predetermined ceramic material or ceramic forming material for forming the second predetermined ceramic, the layer comprising fibres of the second ceramic material or one or more of the ceramic forming materials for forming the second ceramic material,
- heating the layer so as to have a minimum porosity of 30% and has at least 40 wt% of fibres.

In the fifth and sixth aspects, the porous element may be formed by a number of interconnected elements as described in relation to e.g. the first aspect. Naturally, also a monolithically, extruded element or an element made by any other method may be used.

As is mentioned above, both the fifth and sixth aspects also benefit from the material considerations, so that the first and second preferably are carbon or nitrogen based or in general mainly covalently bonded ceramics and most preferably are SiC or Si₃N₄.

Alternatively, again, it may be desire that at least the second ceramic materials is an oxide based ceramic, if e.g. a better thermal insulation is desired.

In the following, preferred embodiments will be described with reference to the drawing, wherein:
- figure 1 illustrates the effects of local heating of a segmented filter,
- figure 2 illustrates a structure of an embodiment of a segmented filter according to the invention,
- Figure 3 illustrates shows an enlarged picture taken by a SEM (scanning electron micrograph) of a damping area of example 1, and
- Figure 4 shows the transition from the damping structure (left hand side) to the filter structure without any fibres.

Figure 1 illustrates a cross section through two segments of a filter where two filtering segments, one in the centre 12 and one outer element 14, are seen. The filter has been used for filtering soot and is now in the process of being regenerated by burning the soot. Due to the characteristics of flow of gas in a typical filter, a majority of the soot has been collected by the central segment 12, and due to the outer segments 14 being able to transmit heat to the surroundings (even when the filter is provided in a thermally insulated can), the outer segments 14 will be colder than the inner segments. This heat will cause the inner segment 12 to expand both in the longitudinal direction and in the radial direction. If a high amount of soot is burned immediately, a very hot zone 15 is generated. As the inner segments are connected to the outer segments via layers 13 of a ceramic cement, the expansion of the inner segments 12 will affect the outer not-so-expanded segments 14, whereby different types of stress are experienced. In addition, when the thermal expansion coefficient of the layer 13 is lower than that of the material of the segments 12 and 14, the expansion of this material will be lower. Due to the expansion in the radial direction, the whole filter assembly will expand, if possible. If a surrounding can cannot allow this, a compression stress is experienced. Due to the expansion in the longitudinal direction, the interaction between the inner and outer segments and the layer will give a tensile stress attempting to prolong the outer segment 14 while a compression is attempted of the inner segments 12. Especially the attempted prolongation of the outer segments will allow cracks 16 therein to propagate. Cracks will render the filter useless as they will allow gas to pass the filter unfiltered.

According to the invention, the layers 13 are made of the same ceramic material as the segments 12 and 14, which reduces the stresses.

It is preferred to use SiC as the ceramic material, as this has superior properties when used for filtering flue gas from a diesel engine.

SiC filters may generally be made in two manners: in a first manner, a paste comprising SiC particles is moulded, such as extruded, into shape and heated, usually sintered, to have the SiC particles fixed in relation to each other. The paste may comprise a pore forming material which vanishes during heating and leaves the material porous. Alternatively, the particles may themselves after heating define a porous structure. It is also possible to realize a bonding between the SiC particles via a secondary material like in the production method of SiSiC or liquid phase sintered SiC.

Alternatively, ceramic forming materials may be provided in the paste which, when heated, will combine and form the SiC. Such ceramic forming elements may be a carbon source, such as carbon fibres, graphite or the like, and a Silicon source, such as metallic Si or other compounds comprising Si. Usually, one of the ceramic forming materials is provided as particles or fibres, for example, in order for this material to define the final shape and thus porosity of the element (segment or cement). Then, other ceramic forming materials may be provided as a liquid or powder, for example, to react with the first-mentioned ceramic forming material which will transform but not necessarily move. Thus, the concentration of the first mentioned ceramic forming material as well as the positions of elements thereof will directly be able to define the final structure of the element.

This is true both for the filter segments and the binder used for connecting the segments to each other.

Below, ceramics of the last type will be described, even though it is clear that also filters made by the first method or any other method may be used.

A formulation has been developed which uses graphite as the main carbon source for the reaction forming process of the first ceramic material building the porous honey comb elements and carbon fibres as the source for the reaction forming process of the second ceramic material building the fibrous layers. The recipe for the honeycomb filter structure which are formed by an extrusion process is given by table 1:

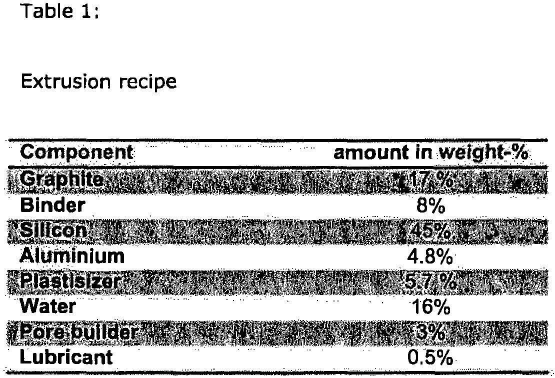

From this paste, a plurality of honeycomb shaped segments may be provided which may, when heated, be used for carrying a catalyst for gas conversion, or may have the through channels plugged to form filter for gas filtration.

The recipe for the fibrous material is given by table 2:

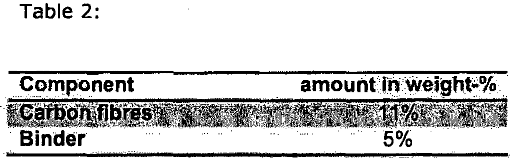

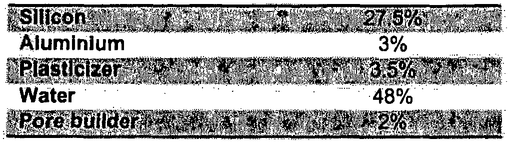

Due to the structure of the carbon fibres one gets by the reaction forming process a structure of three dimensional cross linked SiC fibres. In dependence of the holding time at the final temperature and on the height of it one gets pure SiC fibres or SiC fibres with a core of carbon and residual Silicon. In the latter case we have a SiC/Si/C fibre composite.

By the amount of pore building material the porosity of the fibrous structure of the damping area can be controlled to be higher or lower than that of the filter structure. The binder should have a minimum content of 10% carbon after pyrolyzation at more than 750°C under inert atmosphere.

Honeycomb elements produced due to the recipe in table 1 are taken in the dried state and are assembled using a binder or paste on the basis of the recipe given in table 2. After subsequent drying the whole assembly is then pyrolyzed at 750 - 900°C under inert atmosphere and then reaction formed (siliconized) under Argon at 1450°C - 1700°C. As a result of that one gets a three dimensional continuous SiC structure where the classic pore structure of the filter substrate in the honeycombs alternates with the fibrous structure of the damping areas between the honeycombs.

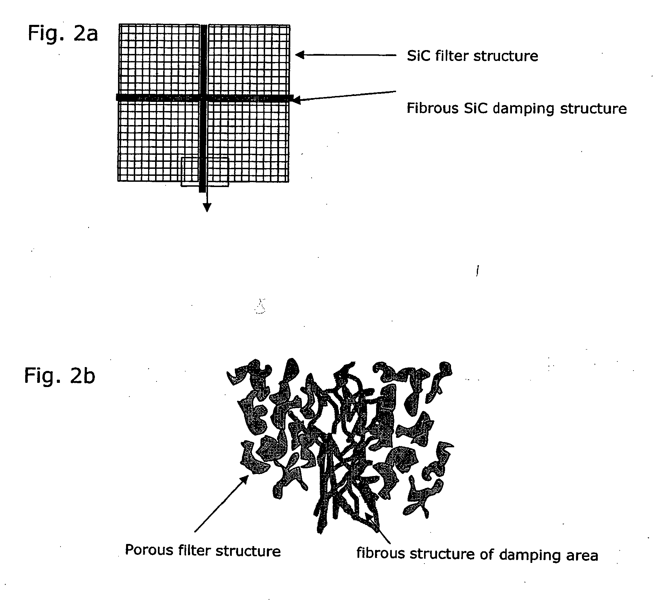

Figure 2 shows the final filter structure schematically. Fig. 2a shows, how the filtering and damping areas are arranged in the monolithic SiC filter and Fig. 2b shows an enlarged section where the filter- and damping structures are alternating.

In contrast to the state of the art filters where sintered ceramic elements are assembled with a fibre cement containing inorganic fibres and an inorganic binder this filter construction leads to the following improvements:
- the same coefficient of thermal expansion for the filter and the assembling material
- the same high thermal conductivity throughout the filter leads to an improved temperature distribution throughout the filter during regeneration
- the amount of fibres inside the damping structure is higher than in the classic ceramic assembling layers.

In contrast to the filter compounds related to the state of the art technology, in this embodiment non-porous and non-ceramic honeycomb structures are assembled to a larger block. The forming of the porous ceramic structure is made by the pyrolyzing and subsequent siliconizing step after the assembling so that one monolithic block is created, which contains regions of a fibrous SiC structure (damping area) and regions of an open sponge like SiC structure (filtration area).

Another contrast to a classic assembling method with a fibre cement is the fact, that the damping structure is also a porous structure with open pores. It is understood that the recipe given in table 2 can be completed by a filler material to reduce the final porosity of the damping structure. This filler material can be SiC, Si₃N₄, B₄C or any other carbide, nitride or in general covalently bonded ceramic. A special type of filler material can be SiC fibres or SiC whisker. Using these fibrous fillers a complete fibre based dumping material with a low porosity can be produced.

Due to the functionality it could be helpful only to use milled carbon fibres as the carbon source resulting in short SiC fibres which have no preferred orientation in the damping layer. This leads to a good damping in all directions. If long carbon fibres with a length of 4 - 10mm are used and the thickness of the fibrous layer is in the range of 0.5 - 3mm, the orientation of the resulting SiC fibres will be mainly in the plane of the fibrous layer, which results in a good stress relaxation in axial direction of the filter honeycombs.

Instead of applying a mixture of carbon fibres with silicon, aluminium and binders as given in the recipe in table 2 it is also possible to take a fabric or a felt of carbon fibres, impregnate it with a slurry of silicon and aluminium and take this wet layer to assemble the dried honeycomb elements. Especially a woven fabric will lead to a high tensile strength in the plane between two honeycomb elements.

### Example1

Recipe as in table 1; the graphite has a particle size of 0 - 63µm, the silicon has a particle size of 40 - 125µm, the binder was a liquid starch with a content of carbon after pyrolysis at 850°C under Nitrogen of 21% by weight, the aluminium was a flake like material where the particles have a mean diameter of 25µm and a thickness of 4µm, the plasticising agent was a methyl cellulose and the pore builder a polyamide powder with a mean particle size of 50µm. This mixture was extruded into a honeycomb structure with a cell density of 300cpsi and a cell wall thickness of 330µm.

For the corresponding fibre based material, a wet mixture according to table 2 was made, where the carbon fibres were milled fibres with a maximum length of 100µm. The type of silicon, aluminium, binder and pore builder were the same as for the extruded honeycomb elements.

The dried honeycombs were assembled using the wet mixture with the carbon fibres as the binding agent. 9 honeycomb elements with a cross section of 49mmx49mm and a length of 150mm were assembled to a complete block. This block was dried for 6 hours in a drying chamber at 120°C.

After drying the block was heated up under Nitrogen atmosphere to 850°C with a maximum heating rate of 5°C/min. At 850°C the temperature was held for 1 hour and then the block was again cooled down. In a second step the block was heated up in Argon atmosphere to a temperature of 1450°C with a maximum heating rate of 10°C/min. At that temperature the block was held for 4 hours. After cooling down a honeycomb block with a continuous SiC structure was obtained. The material in the filter structure of the honeycombs had a porosity of 57% and a mean pore size of 12µm. The material in the damping structure had a porosity of 65% and a pore diameter of 22µm. The specific weight of the filter material was, due to the open structure of the honey comb material, 540 g/l. The specific weight of the fibrous material was 880g/l.

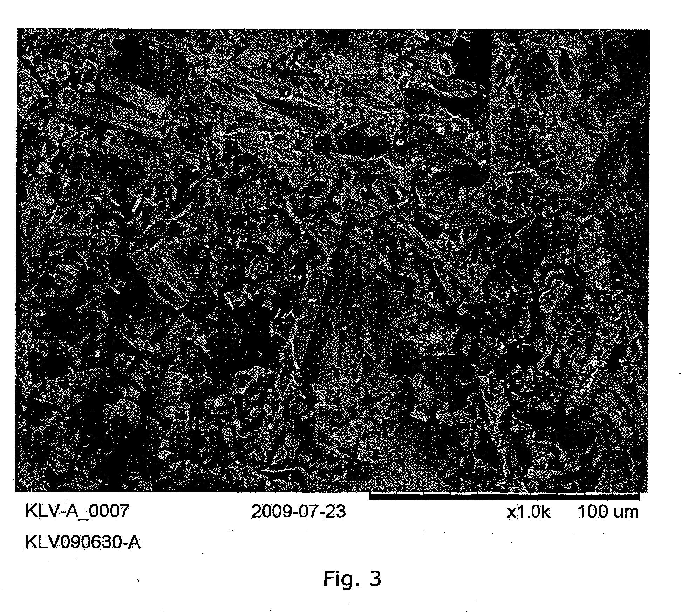

Figure 3 shows an enlarged picture taken by a SEM (scanning electron micrograph) of the damping area of example 1. One can clearly see the SiC-fibres which are bonded together with crystalline SiC structures, which result from the pyrolyzed and subsequent siliconized liquid starch binder.

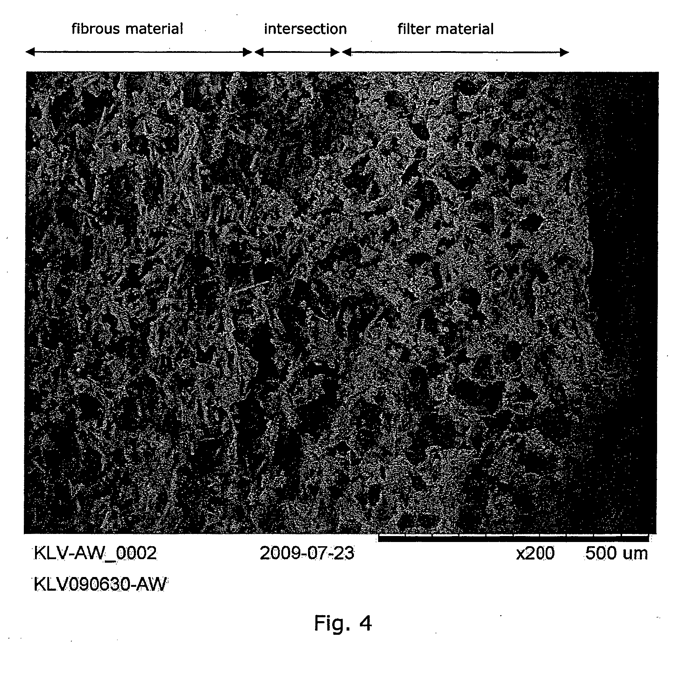

Figure 4 shows the transition from the damping structure (left hand side) to the filter structure without any fibres.

### Example 2

Same honeycomb material as in example 1. The fibre based damping material has as a filler material in the starting mixture a SiC with the particle size F240. The recipe for that is given by table 3.

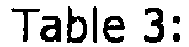

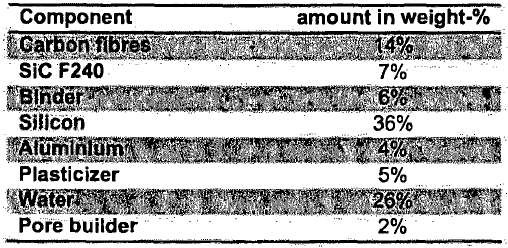

The same raw materials for the carbon fibres, the silicon, and the aluminium were taken as in example 1. In the same way as in example 1 dried honey combs from the same type as in example 1 were assembled to a filter block. Drying, pyrolysis and reaction forming have been performed in the same was as for example 1. The difference to example 1 is that the porosity of the resulting dumping material was in the range of 60%. The specific weight of the filter material was due to the open structure of the honey comb material 540 g/l. The specific weight of the fibrous material was 980g/l.

### Example 3

A block as described in example 1 was taken in the green dried state. A cylinder with a diameter of 143mm was cut out of this block where the z-axis of the cylinder was parallel to the direction of the channels of the shaped honey comb elements. The same recipe as given in table 2 was taken to make a wet mixture containing carbon fibres, silicon granules, and aluminium flakes. This mixture was used to form an outer layer on the cylinder barrel.

After drying this cylinder was heat treated in the same way as in example 1. After this process a honeycomb block in form of a cylinder with a continuous SiC structure with a diameter of 144mm was given. The material in the filter structure of the honeycombs had a porosity of 57% and a mean pore size of 12µm. The material in the damping structure has a porosity of 65%. The specific weight of the filter material is due to the open structure of the honey comb material 540 g/l. The specific weight of the fibrous material of the damping layers and the outer sealing layer is 880g/l.

### Comparative example 1

The SiC honeycomb block of example 1 was taken and a cylinder with a diameter of 143mm was cut out of it in the same way as described in example 3. This cylinder was sealed in a subsequent step with a fibre cement. The recipe of this cement is given in table 4. After applying the outer sealing layer the block was dried for 6 hours in a drying chamber at 120°C and than hardened at 700°C for 1 hour.

### Comparative example 2

Shaped honey comb elements as used in examples 1 - 3 are heat treated after drying in the same way as the whole assembled blocks in these examples. After the heat treatment porous honey comb elements with a continuous SiC structure were received. These honey combs were assembled to a block of 9 elements using the recipe given in table 4

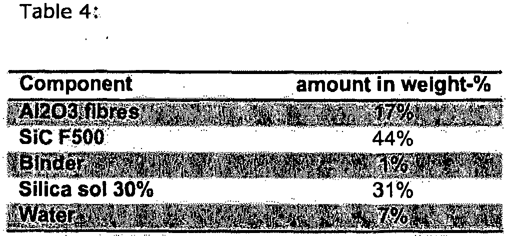

The assembled block was dried at a temperature of 120°C in a drying chamber for 6 hours. The fibre cement in this example had a density after drying of 1.6 g/cm³. This value also includes some large pores with a diameter of 1 - 2mm resulting from degassing during the drying process. In the same way as in example 3 a cylinder with a diameter of 143mm was cut out of this block. In a subsequent step the cylinder block was coated using the same cement as for the assembling and then also dried for 6 hours at 120°C. The final filter assembly was then hardened at 700°C for 1 hour.

The honey comb elements of all examples have in the final state after the heat treatment a specific weight of 540 g/l. Using the method for making a monolithic filter assembly as described in this invention, for example in examples 1 to 3, leads to a lower specific weight of the final assembled filter in comparison to filter blocks, assembled by a classic fibre cement as described in comparative example 2. Even a coating with classic cement leads to a higher specific filter weight. In table 5 all results regarding specific weight of the honey combs, of the sealing or damping elements, and of the final assembled filter block are listed.

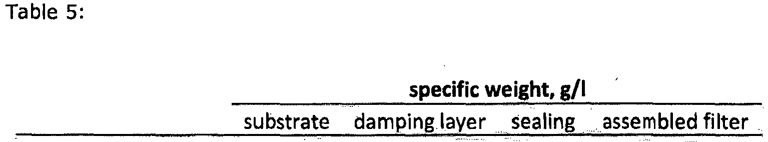

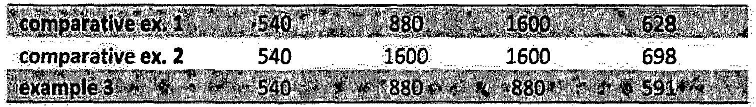

It can be clearly seen, that the thermal mass of the final filter can be reduced if the method for the design of the monolith is used as described in this invention. A lower thermal weight and the high thermal conductivity throughout the whole filter leads to a fast heat up of the whole system even at low exhaust temperatures. This is an important feature for future filter systems comprising a catalytic coating.

## Claims

1. A ceramic element comprising:
- a plurality of porous elements comprising a plurality of parallel through channels divided by porous walls made of a first predetermined ceramic material and
- a porous, fibrous material interconnecting the plurality of porous elements into a single element, the porous, fibrous material being made of a second predetermined ceramic material,
wherein the fibrous material has a minimum porosity of 30% and has a minimum wt% of fibres of 40%.

2. An element according to claim 1, wherein the walls of the plurality of porous elements comprising a plurality of interconnected grains or particles of the first predetermined ceramic material.

3. An element according to claim 1 or 2, wherein the walls comprise a number of reinforcing fibres of the first ceramic material.

4. An element according to any of the preceding claims, wherein the porous, fibrous material comprises at least 40 wt% fibres with a length of 10% or less of a mean distance between the porous elements.

5. An element according to any of the preceding claims, wherein the porous, fibrous material comprises at least 2 wt% fibres with a length of 100-1000% of a mean distance between the porous elements.

6. An element according to any of the preceding claims, wherein the porous, fibrous material comprises at least 38 wt% fibres with a length of 10% or less of a mean distance between the porous elements and at least 2 wt% fibres with a length of 100-1000% of the mean distance.

7. An element according to any of the preceding claims, wherein the first and second ceramics are the same ceramic.

8. A method of manufacturing a porous, ceramic element, the method comprising
- shaping into a plurality of shaped elements one or more pastes comprising a first predetermined ceramic material or ceramic forming materials for forming the first predetermined ceramic, each element comprising a plurality of through holes divided by walls,
- assembling the shaped elements into one assembly by providing, between the shaped elements, a layer comprising fibres of a second ceramic material or one or more ceramic forming materials for forming the second ceramic material,
- heating the assembly so as to obtain, between the shaped elements, a layer of a porous, fibrous material having a minimum porosity of 30% and has a minimum wt% of fibres of 40%.

9. A method according to claim 8, wherein the shaping step comprises shaping the one or more pastes comprising a plurality of grains or particles of the first predetermined ceramic material or one or more ceramic forming materials for forming the first predetermined ceramic material.

10. A method according to any of claims 8-9, wherein the shaping step comprises shaping the one or more pastes comprising a number of reinforcing fibres of the first ceramic material.

11. A ceramic element comprising:
- a porous element comprising a plurality of parallel through channels divided by porous walls made of a first predetermined ceramic material, the porous element having an outer surface, and
- a porous, fibrous material provided on at least part of the outer surface, wherein the fibrous material is made of a second predetermined ceramic material and has a minimum porosity of 30% and has at least 40 Wt% of fibres.

12. A method of manufacturing a porous, ceramic element, the method comprising
- shaping one or more pastes into a shaped element comprising a first predetermined ceramic material or ceramic forming materials for forming the first predetermined ceramic, the element comprising a plurality of through holes divided by walls and an outer surface,
- providing, on at least a part of the outer surface of the shaped element, a layer comprising a second predetermined ceramic material or ceramic forming material for forming the second predetermined ceramic, the layer comprising fibres of the second ceramic material or one or more of the ceramic forming materials for forming the second ceramic material,
- heating the layer so as to have a minimum porosity of 30% and has at least 40 wt% of fibres.

## Patentansprüche

1. Keramikelement, Folgendes umfassend:
- mehrere poröse Elemente, die mehrere parallele Durchgangskanäle umfassen, die durch poröse Wände getrennt sind, die aus einem ersten festgelegten Keramikmaterial bestehen, und
- ein poröses Fasermaterial, das die mehreren porösen Elemente zu Einzelelementen zusammenschließt, wobei das poröse Fasermaterial aus einem zweiten festgelegten Keramikmaterial besteht,
wobei das Fasermaterial eine minimale Porosität von 30 % und einen minimalen Gewichtsanteil an Fasern von 40 % aufweist.

2. Element nach Anspruch 1, wobei die Wände der mehreren porösen Elemente mehrere zusammengeschlossene Körner oder Partikel des ersten festgelegten Keramikmaterials umfassen.

3. Element nach Anspruch 1 oder 2, wobei die Wände eine Anzahl Verstärkungsfasern aus dem ersten Keramikmaterial umfassen.

4. Element nach einem der vorhergehenden Ansprüche, wobei das poröse Fasermaterial mindestens 40 Gew.-% Fasern mit einer Länge von 10 % oder weniger des mittleren Abstandes zwischen den porösen Elementen umfasst.

5. Element nach einem der vorhergehenden Ansprüche, wobei das poröse Fasermaterial mindestens 2 Gew.-% Fasern mit einer Länge von 100 bis 1000 % eines mittleren Abstandes zwischen den porösen Elementen umfasst.

6. Element nach einem der vorhergehenden Ansprüche, wobei das poröse Fasermaterial mindestens38 Gew.-% Fasern mit einer Länge von 10 % oder weniger eines mittleren Abstandes zwischen den porösen Elementen und mindestens 2 Gew.-% Fasern mit einer Länge von 100 bis 1000 % des mittleren Abstandes umfasst.

7. Element nach einem der vorhergehenden Ansprüche, wobei die erste und die zweite Keramik die gleiche Keramik sind.

8. Verfahren zur Herstellung eines porösen Keramik-elements, wobei das Verfahren Folgendes umfasst:
- Formen mehrerer geformter Elemente, die ein erstes festgelegtes Keramikmaterial oder Keramikbildungsmaterialien zum Bilden der ersten festgelegten Keramik umfassen, aus einer oder mehreren Pasten, wobei jedes Element mehrere Durchgangsöffnungen umfasst, die durch Wände getrennt sind,
- Zusammenfügen der geformten Elemente zu einer Anordnung durch Bereitstellen einer Schicht zwischen den geformten Elementen, die Fasern aus einem zweiten Keramikmaterial oder einem oder mehreren Keramikbildungsmaterialien zum Bilden des zweiten Keramikmaterials umfasst,
- Erhitzen der Anordnung derart, dass zwischen den geformten Elementen eine Schicht porösen Fasermaterials erzielt wird, das eine minimale Porosität von 30 % und einen minimalen Gewichtsanteil an Fasern von 40 % aufweist.

9. Verfahren nach Anspruch 8, wobei der Schritt des Formens das Formen der einen oder mehreren Pasten umfasst, die mehrere Körner oder Partikel des ersten festgelegten Keramikmaterials oder einem oder mehreren Keramikbildungsmaterialien zum Bilden des ersten festgelegten Keramikmaterials umfassen.

10. Verfahren nach einem der Ansprüche 8 bis 9, wobei der Schritt des Formens das Formen der einen oder mehreren Pasten umfasst, die eine Anzahl von Verstärkungsfasern aus dem ersten Keramikmaterial umfassen.

11. Keramikelement, Folgendes umfassend:
- ein poröses Element, das mehrere parallele Durchgangskanäle umfasst, die durch poröse Wände getrennt sind, die aus einem ersten festgelegten Keramikmaterial bestehen, wobei das poröse Element eine Außenfläche aufweist, und
- ein poröses Fasermaterial, das an mindestens einem Teil der Außenfläche bereitgestellt ist, wobei das Fasermaterial aus einem zweiten festgelegten Keramikmaterial besteht und eine minimale Porosität von 30 % und mindestens 40 Gew.-% Fasern aufweist.

12. Verfahren zur Herstellung eine porösen Keramikelements, wobei das Verfahren Folgendes umfasst:
- Formen mehrerer geformter Elemente, die ein erstes festgelegtes Keramikmaterial oder Keramikbildungsmaterialien zum Bilden der ersten festgelegten Keramik umfassen, aus einer oder mehreren Pasten, wobei jedes Element mehrere Durchgangsöffnungen, die durch Wände getrennt sind, und eine Außenfläche umfasst,
- Bereitstellen einer Schicht, die ein zweites festgelegtes Keramikmaterial oder Keramikbildungsmaterial zum Bilden der zweiten festgelegten Keramik umfasst, auf mindestens einem Teil der Außenfläche des geformten Elements, wobei die Schicht Fasern aus dem zweiten Keramikmaterial oder einem oder mehreren der Keramikbildungsmaterialien zum Bilden des zweiten Keramikmaterials umfasst,
- Erhitzen der Schicht derart, dass eine minimale Porosität von 30 % und ein minimaler Gewichtsanteil an Fasern von 40 % erzielt wird.

## Revendications

1. Élément en céramique comprenant .
- une pluralité d'éléments poreux comprenant une pluralité de canaux traversants parallèles divisés par des parois poreuses se composant d'un premier matériau céramique prédéterminé, et
- un matériau fibreux et poreux reliant la pluralité d'éléments poreux en un seul élément, le matériau poreux et fibreux se composant d'un second matériau céramique prédéterminé,
dans lequel le matériau fibreux a une porosité minimale de 30 % et a un % en poids minimal de fibres de 40 %.

2. Élément selon la revendication 1, dans lequel les parois de la pluralité d'éléments poreux comprenant une pluralité de grains ou de particules relié(e)s entre eux/elles du premier matériau céramique prédéterminé.

3. Élément selon la revendication 1 ou 2, dans lequel les parois comprennent un nombre de fibres de renforcement du premier matériau céramique.

4. Élément selon l'une quelconque des revendications précédentes, dans lequel le matériau fibreux et poreux comprend au moins 40 % en poids de fibres ayant une longueur inférieure ou égale à 10 % d'une distance moyenne entre les éléments poreux.

5. Élément selon l'une quelconque des revendications précédentes, dans lequel le matériau fibreux et poreux comprend au moins 2 % en poids de fibres ayant une longueur de 100 à 1000 % d'une distance moyenne entre les éléments poreux.

6. Élément selon l'une quelconque des revendications précédentes, dans lequel le matériau fibreux et poreux comprend au moins 38 % de fibres ayant une longueur inférieure ou égale à 10 % d'une distance moyenne entre les éléments poreux et au moins 2 % en poids de fibres ayant une longueur de 100 à 1000 % de la distance moyenne.

7. Élément selon l'une quelconque des revendications précédentes, dans lequel les première et seconde céramiques sont la même céramique.

8. Procédé de fabrication d'un élément en céramique poreux, le procédé consistant à :
- façonner en une pluralité d'éléments façonnés une ou plusieurs pâtes comprenant un premier matériau céramique prédéterminé ou des matériaux formant une céramique pour former la première céramique prédéterminée, chaque élément comprenant une pluralité de trous traversants divisés par des parois,
- assembler les éléments façonnés en un ensemble en utilisant, entre les éléments façonnés, une couche comprenant des fibres d'un second matériau céramique ou d'un ou plusieurs matériaux formant une céramique pour former le second matériau céramique,
- chauffer l'ensemble de façon à obtenir, entre les éléments façonnés, une couche d'un matériau poreux et fibreux ayant une porosité minimale de 30 % et ayant un % en poids minimal de fibres de 40 %.

9. Procédé selon la revendication 8, dans lequel l'étape de façonnage comprenant le façonnage de la ou des pâtes comprenant une pluralité de grains ou de particules du premier matériau céramique prédéterminé ou d'un ou plusieurs matériaux formant une céramique pour former le premier matériau céramique prédéterminé.

10. Procédé selon l'une quelconque des revendications 8 à 9, dans lequel l'étape de façonnage comprend le façonnage de la ou des pâtes comprenant un nombre de fibres de renforcement du premier matériau céramique.

11. Élément en céramique comprenant :
- un élément poreux comprenant une pluralité de canaux traversants parallèles divisés par des parois poreuses se composant d'un premier matériau céramique prédéterminé, l'élément poreux ayant une surface externe, et
- un matériau fibreux et poreux placé sur au moins une partie de la surface externe, dans lequel le matériau fibreux se compose d'un second matériau céramique prédéterminé et a une porosité minimale de 30 % et a au moins 40 % en poids de fibres.

12. Procédé de fabrication d'un élément en céramique poreux, le procédé consistant à :
- façonner une ou plusieurs pâtes en un élément façonné comprenant un premier matériau céramique prédéterminé ou des matériaux formant une céramique pour former la première céramique prédéterminée, l'élément comprenant une pluralité de trous traversants divisés par des parois et une surface externe,
- utiliser, sur au moins une partie de la surface externe de l'élément façonné, une couche comprenant un second matériau céramique prédéterminé ou un matériau formant une céramique pour former la seconde céramique prédéterminée, la couche comprenant des fibres du second matériau céramique ou d'un ou plusieurs matériaux formant une céramique pour former le second matériau céramique,
- chauffer la couche de sorte à avoir une porosité minimale de 30 % et à avoir au moins 40 % en poids de fibres.
